# EUROPEAN PATENT APPLICATION

(11) **EP 3 699 844 A1**
(43) Date of publication of application: **26.08.2020**
(21) Application number: 20154285.9
(22) Date of filing: 29.01.2020
(51) Int. Cl.: G06Q 10/08, G06Q 10/06, G06Q 10/04, G06Q 10/00

(54) **WORK SUPPORT METHOD AND PROGRAM**

(30) Priority: 20.02.2019 JP 2019028297
(71) Applicant: Panasonic Intellectual Property Management Co., Ltd., Osaka-shi, Osaka 540-6207 (JP)
(72) Inventor: OHIRA, Yuki, Osaka, 540-207 (JP); TAMURA, Takashi, Osaka, 540-6207 (JP)
(74) Representative: Eisenführ Speiser

(57) **Abstract**

[Problem to be Solved]

An object of the present invention is to perform appropriate work support matching a worker.

[Solution]

The appropriate work support matching a worker is performed by receiving from a store user terminal device 10 user ID information on a store user U and work result data D3 representing a work result by the store user U, transmitting to the store user terminal device 10, as display information to be displayed on a display 53 in the store user terminal device 10, a first guidance for guiding a method of acquiring information about a site of a cooling installation device 4 by a camera 54A in the store user terminal device 10 and a second guidance for guiding a site of the cooling installation device 4 to acquire information by the camera 54A, when a user evaluation of the store user U evaluated based on the work result data D3 and the user ID information is not more than a predetermined first threshold value, and omitting the first guidance and transmitting the second guidance to the terminal device as display information to be displayed on the display 53 when the user evaluation is more than the first threshold value.

## Description

### BACKGROUND OF THE INVENTION

### Field of the Invention

The present invention relates to a work support method and a program.

### Description of the Related Art

Examples of a technique for supporting work according to a manual of a worker include a technique in Japanese Patent Laid-Open No. 2017/126292.

Japanese Patent Laid-Open No. 2017/126292 describes "including a display unit that sequentially displays a plurality of images constituting a work manual representing a work procedure for a work object, a detection unit that detects a timing at which the image to be displayed by the display unit is switched to a subsequent image based on an operation of a user, a measurement unit that measures for each of the images a time period during which the display unit displays the image based on the timing detected by the detection unit, and a generation unit that reduces a part of information represented by the plurality of images constituting the work manual in response to the display time period for each of the images measured by the measurement unit to newly create a work manual an information amount of which has been reduced".

According to Japanese Patent Laid-Open No. 2017/126292, the work manual the information amount of which has been reduced is created depending on the time period (display time period) during which the worker switches each of the plurality of images constituting the work manual. Accordingly, a manual suitable for each worker is created.

Although the information amount of the work manual is appropriately reduced depending on the worker in Japanese Patent Laid-Open No. 2017/126292, a work content itself may not be changed, and work support may not be appropriate depending on the worker.

### SUMMARY OF THE INVENTION

The present invention is directed to providing a work support method and a program capable of performing appropriate work support matching a worker.

The present invention provides a work support method used for a work support system that supports, using a computer connected via a network to a cooling installation device and a terminal device, the cooling installation device including a first sensor that acquires measurement information including at least in-storage-area temperature information, the terminal device including a second sensor that acquires information different from the in-storage-area temperature information from the cooling installation device and a display, the terminal device being operated by a user, work by the user related to maintenance and inspection for the cooling installation device, the work support method including receiving from the terminal device user ID information on the user and work result data representing a work result by the user, transmitting to the terminal device, as display information to be displayed on the display, a first guidance for guiding a method of acquiring information about a site of the cooling installation device by the second sensor and a second guidance for guiding a site of the cooling installation device to acquire information by the second sensor, when a user evaluation of the user evaluated based on the work result data and the user ID information is not more than a predetermined first threshold value, and omitting the first guidance and transmitting the second guidance to the terminal device as the display information to be displayed on the display when the user evaluation is more than the first threshold value.

According to the present invention, appropriate work support matching a worker can be performed.

### BRIEF DESCRIPTION OF THE DRAWINGS

FIG. 1 is a diagram illustrating a configuration of a cooling installation device management system according to an embodiment of the present invention;
FIG. 2 is a diagram illustrating an example of a support screen G;
FIG. 3 is a diagram illustrating a correspondence example among a user evaluation, a support screen G, and work to be guided;
FIG. 4 is a block diagram illustrating a functional configuration of a cooling installation device;
FIG. 5 is a block diagram illustrating a functional configuration of a store device;
FIG. 6 is a block diagram illustrating a functional configuration of a store user terminal device;
FIG. 7 is a block diagram illustrating a functional configuration of a management server;
FIG. 8 is a sequence diagram of a cooling installation device management system when an abnormality has not occurred in the cooling installation device;
FIG. 9 is a sequence diagram of the cooling installation device management system when an abnormality has occurred in the cooling installation device;
FIG. 10 is a flowchart of abnormality coping processing;
FIG. 11 is a flowchart of proficiency level determination processing;
FIG. 12 is a diagram illustrating one example of a coping information table;
FIG. 13 is a flowchart of cause confirmation processing; and
FIG. 14 is a flowchart of proficiency level updating processing.

### DETAILED DESCRIPTION OF THE PREFERRED EMBODIMENT

According to a first aspect of the invention, there is provided a work support method used for a work support system that supports, using a computer connected via a network to at least one cooling installation device and a terminal device, the cooling installation device including a first sensor that acquires measurement information including at least in-storage-area temperature information, the terminal device including a second sensor that acquires information different from the in-storage-area temperature information from the cooling installation device and a display, the terminal device being operated by a user, work by the user related to maintenance and inspection for the cooling installation device, the work support method including receiving from the terminal device user ID information on the user and work result data representing a work result by the user, transmitting to the terminal device, as display information to be displayed on the display, a first guidance for guiding a method of acquiring information about a site of the cooling installation device by the second sensor and a second guidance for guiding a site of the cooling installation device to acquire information by the second sensor, when a user evaluation of the user evaluated based on the work result data and the user ID information is not more than a predetermined first threshold value, and omitting the first guidance and transmitting the second guidance to the terminal device as display information to be displayed on the display when the user evaluation is more than the first threshold value.

As a result, if the user evaluation is not more than the predetermined first threshold value, a user who can implement work only by the second guidance even if the first guidance is not guided is not made to perform useless work by the first guidance. On the other hand, if the user evaluation is more than the predetermined first threshold value, unnecessary work is not guided to a user who has obtained the user evaluation among a plurality of types of work to be guided by work support. Accordingly, a work burden related to maintenance and inspection can be reduced, and the user can quickly finish work.

A second aspect of the invention provides the work support method in which when the user evaluation is more than a second threshold value larger than the first threshold value, the first guidance and the second guidance are omitted as the display information to display on the display, and a third guidance for making the user judge a state of a work object in the cooling installation device is transmitted to the terminal device in the first aspect of the invention.

As a result, a user the user evaluation of which is more than the second threshold value can quickly judge the state of the work object by himself/herself without implementing respective types of work by the first guidance and the second guidance.

A third aspect of the invention provides the work support method in which when the user evaluation is more than the first threshold value and is not more than the second threshold value, the second guidance a content of which is simplified is transmitted to the terminal device in the second aspect of the invention.

As a result, the second guidance can be presented by omitting useless information for a user who has obtained the user evaluation that is more than the first threshold value and is not more than the second threshold value.

A fourth aspect of the invention provides the work support method in which the user evaluation is evaluated based on a number of times of transmission of the work result data in the second aspect or the third aspect of the invention.

As a result, an experience and a performance of work performed for the cooling installation device can be quantified by the number of times of transmission of the work result data, and can be reflected on the user evaluation.

A fifth aspect of the invention provides the work support method in which when the user evaluation is more than the first threshold value or the second threshold value, the user evaluation is decreased when a time period required for the work is not less than a predetermined time period or a degree of matching between the work result data and reference data is less than a predetermined matching degree threshold value in the fourth aspect of the invention.

As a result, even for a user who has obtained the user evaluation that is more than the first threshold value or the second threshold value, the user evaluation can be decreased to a user evaluation matching a user coping level with the work when the time period required for the work is not less than the predetermined time period or the degree of matching between the work result data and the reference data is less than the predetermined matching degree threshold value.

A sixth aspect of the invention provides the work support method in which the user evaluation is evaluated based on an effective number of times as a number of times in which effective work is performed by the user in any one of the first aspect to the third aspect of the invention.

As a result, an experience and a performance of work performed for the cooling installation device can be quantified by the number of times of transmission of the work result data or the effective number of times, and can be reflected on the user evaluation.

A seventh aspect of the invention provides the work support method in which the effective number of times is added depending on a time period required for the work or a degree of matching between a work result represented by the work result data and reference data in the sixth aspect of the invention.

As a result, the effective number of times on which a user coping level with the work has been reflected can be counted.

An eighth aspect of the invention provides the work support method in which the user evaluation is a proficiency level based on a number of times of transmission of the work result data or an effective number of times as a number of times in which effective work is performed by the user in any one of the first aspect to the third aspect of the invention.

As a result, the user evaluation can be quantified at a proficiency level on which an experience and a performance of work performed for the cooling installation device have been reflected.

A ninth aspect of the invention provides the work support method in which the proficiency level is added every time the number of times of transmission or the effective number of times reaches a predetermined number of times, and is decreased when a time period required for the work is not less than a predetermined time period or a degree of matching between the work result data and reference data is less than a predetermined matching degree threshold value in the eighth aspect of the invention.

As a result, a proficiency level on which an experience and a performance of work performed for the cooling installation device by a user and a coping level backed up by a result of the work by the user have been reflected can be set.

A tenth aspect of the invention provides the work support method in which the number of times of transmission or the effective number of times is added up for the proficiency level of the user when the user performs the work in the ninth aspect of the invention.

As a result, an experience and a performance of work by a user can be accurately evaluated for the proficiency level at the time of the work.

An eleventh aspect of the invention provides the work support method in which the proficiency level of the user is decreased when a predetermined period has elapsed since the work result data is acquired in any one of the eighth aspect to the tenth aspect of the invention.

As a result, when a memory of a user for work has faded, a proficiency level of the user can be decreased and evaluated to match the memory.

A twelfth aspect of the invention provides the work support method in which the user evaluation is performed for each of cooling installation device ID information on the cooling installation devices in the first aspect of the invention.

As a result, the user evaluation is grasped for each of the cooling installation devices, and appropriate support can be implemented.

A thirteenth aspect of the invention provides the work support method in which the user evaluation is performed for each of device types of the cooling installation devices in the first aspect of the invention.

As a result, the user evaluation is grasped for each of the device types of the cooling installation devices, and appropriate support can be implemented.

A fourteenth aspect of the invention provides the work support method in which the user evaluation is performed for each of cooling installation device ID information on the cooling installation devices and for each of device types of the cooling installation devices, and even when the respective user evaluations corresponding to the cooling installation device ID information on the cooling installation device are not more than the first threshold value, the first guidance is omitted and the second guidance is transmitted to the terminal device when the respective user evaluations of the cooling installation devices that are the same in the device type and differ in the cooling installation device ID information are more than the first threshold value in the first aspect of the invention.

As a result, when a user receives support of work for not only the cooling installation devices of the same cooling installation device ID information but also a group of cooling installation devices of the same type, the user can receive support matching his/her own user evaluation.

According to a fifteenth aspect of the invention, there is provided a work support method used for a work support system that supports, using a computer connected via a network to a cooling installation device and a terminal device, the cooling installation device including a first sensor that acquires measurement information including at least in-storage-area temperature information, the terminal device including a second sensor that acquires information different from the in-storage-area temperature information from the cooling installation device and a display, the terminal device being operated by a user, work by the user related to maintenance and inspection for the cooling installation device, in which the terminal device transmits user ID information on the user and work result data representing a work result by the user, and transmits to the terminal device, as display information to be displayed on the display, a first guidance for guiding a method of acquiring information about a site of the cooling installation device by the second sensor and a second guidance for guiding a site of the cooling installation device to acquire information by the second sensor, when a user evaluation of the user evaluated based on the work result data and the user ID information is not more than a predetermined first threshold value, and omits the first guidance and transmits the second guidance to the terminal device as display information to be displayed on the display when the user evaluation is more than the first threshold value.

According to the present invention, a similar effect to that in the first invention is obtained.

According to a sixteenth aspect of the invention, there is provided a program for causing a computer connected via a network to a cooling installation device and a terminal device, the cooling installation device including a first sensor that acquires measurement information including at least in-storage-area temperature information, the terminal device including a second sensor that acquires information different from the in-storage-area temperature information from the cooling installation device and a display, the terminal device being operated by a user, the computer being in a work support system for supporting work by the user related to maintenance and inspection for the cooling installation device using the computer, to perform processing for receiving from the terminal device user ID information on the user and work result data representing a work result by the user, transmitting to the terminal device, as display information to be displayed on the display, a first guidance for guiding a method of acquiring information about a site of the cooling installation device by the second sensor and a second guidance for guiding a site of the cooling installation device to acquire information by the second sensor, when a user evaluation of the user evaluated based on the work result data and the user ID information is not more than a predetermined first threshold value, and omitting the first guidance and transmitting the second guidance to the terminal device as display information to be displayed on the display when the user evaluation is more than the first threshold value.

According to the present invention, a similar effect to that in the first invention is obtained.

According to a seventeenth aspect of the invention, there is provided a program for causing, using a computer connected via a network to a cooling installation device and a terminal device, the cooling installation device including a first sensor that acquires measurement information including at least in-storage-area temperature information, the terminal device including a second sensor that acquires information different from the in-storage-area temperature information from the cooling installation device and a display, the terminal device being operated by a user, the terminal device being in a work support system for supporting work by the user related to maintenance and inspection for the cooling installation device, to perform processing for transmitting user ID information on the user and work result data representing a work result by the user, transmitting to the terminal device, as display information to be displayed on the display, a first guidance for guiding a method of acquiring information about a site of the cooling installation device by the second sensor and a second guidance for guiding a site of the cooling installation device to acquire information by the second sensor, when a user evaluation of the user evaluated based on the work result data and the user ID information is not more than a predetermined first threshold value, and omitting the first guidance and transmitting the second guidance to the terminal device as display information to be displayed on the display when the user evaluation is more than the first threshold value.

According to the present invention, a similar effect to that in the first invention is obtained.

An embodiment of the present invention will be described below with reference to the drawings.

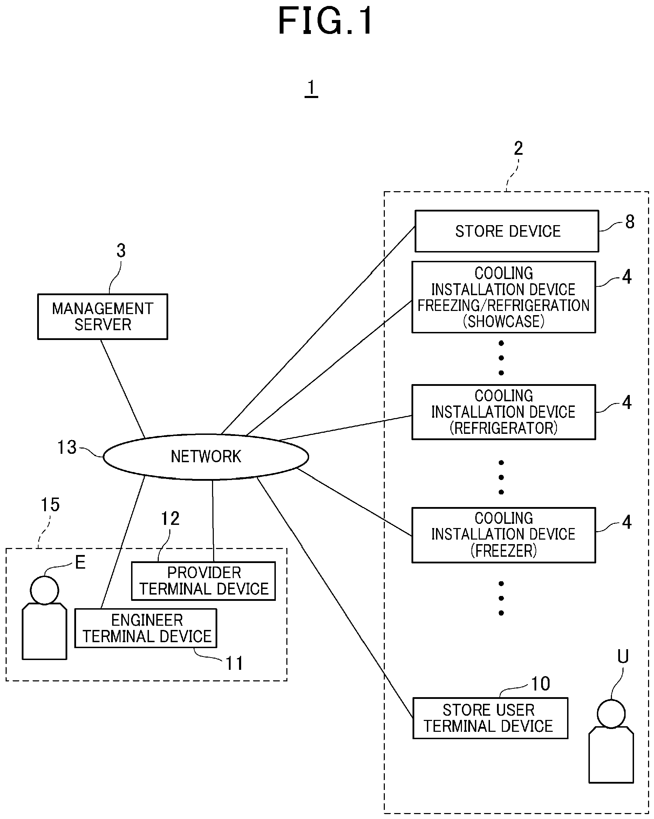

FIG. 1 is a diagram illustrating a configuration of a cooling installation device management system 1 according to the present embodiment.

The cooling installation device management system 1 is a system that includes a management server 3 and manages a cooling installation device 4 installed in a store 2 such as a supermarket or a convenience store using the management server 3.

The cooling installation device 4 is a generic name of a refrigeration device and a freezing device. In the present embodiment, one or more refrigeration/freezing showcases, one or more refrigerators, and one or more freezer are each arranged as a cooling installation device in the store 2. Each of the cooling installation devices 4 is supplied with a refrigerant via a refrigerant piping from a freezing machine installed outside the store 2 and including a compressor, and cools articles such as goods housed in a storage area of the cooling installation device 4. A freezing machine may be installed in a machine room in the store. The cooling installation device 4 may include a freezing machine.

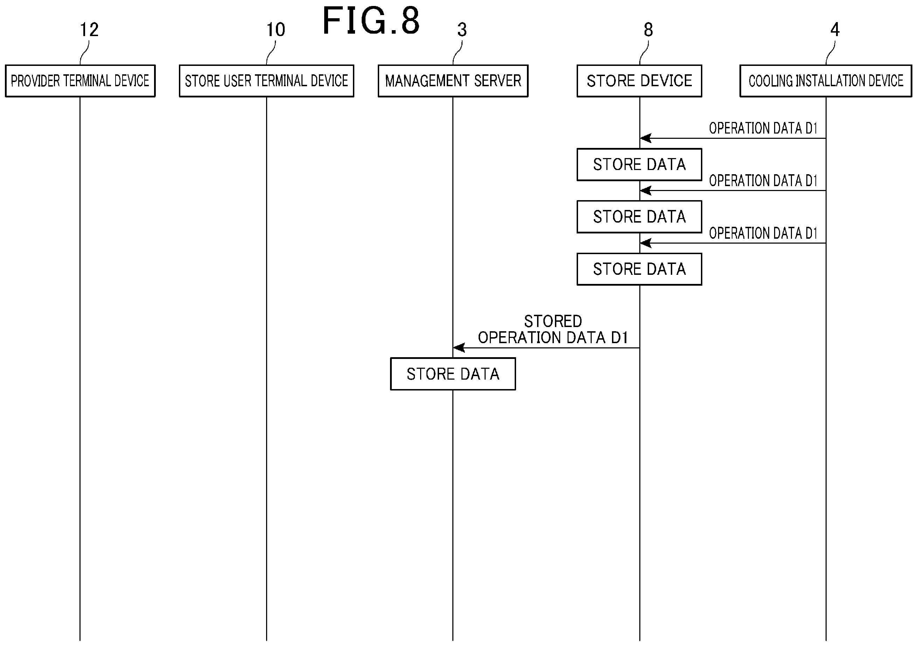

A store device 8 for managing each of the cooling installation devices 4 by a store user U as a user of the cooling installation device 4, such as a store owner or a store staff, is installed in the store 2, and is connected to a network 13 for enabling communication with each of the cooling installation devices 4 and the management server 3. The store device 8 acquires operation data D1 related to an operation state (see FIG. 8) from each of the cooling installation devices 4, and transmits the operation data D1 to the management server 3. The management server 3 performs various types of management of the cooling installation devices 4 using the operation data D1.

The cooling installation device management system 1 according to the present embodiment also functions as a work support system for supporting work by the store user U related to maintenance and inspection for the cooling installation devices 4. More specifically, the management server 3 according to the present embodiment has a confirmation work support function for supporting confirmation work to be performed by the store user U for the cooling installation device 4 in which an abnormality has occurred.

The confirmation work includes work for confirming a state of a component, a member, a site, or the like included in each of the cooling installation device 4 to determine a cause of the abnormality in the cooling installation device 4. A work object is hereinafter referred to as a "confirmation site". Work for confirming a state of the confirmation site is referred to as "state confirmation work", and the "state confirmation work" is distinguished from the above-described confirmation work included in the entire work.

In the state confirmation work, the store user U picks up an image of the confirmation site to acquire a picked-up image in which the state of the confirmation site appears, and transmits the acquired picked-up image to the management server 3 while being included in a work result of the state confirmation work. The management server 3 determines the state of the confirmation site based on the picked-up image of the confirmation site, and specifies the cause of the abnormality that has occurred in the cooling installation device 4 based on a result of the state determination.

In the cooling installation device management system 1, a store user terminal device 10 to be operated by the store user U is provided in the store 2. In confirmation work support by the management server 3, a support screen G as an example of display information is displayed on the store user terminal device 10, and various types of work in the confirmation work is guided by the support screen G.

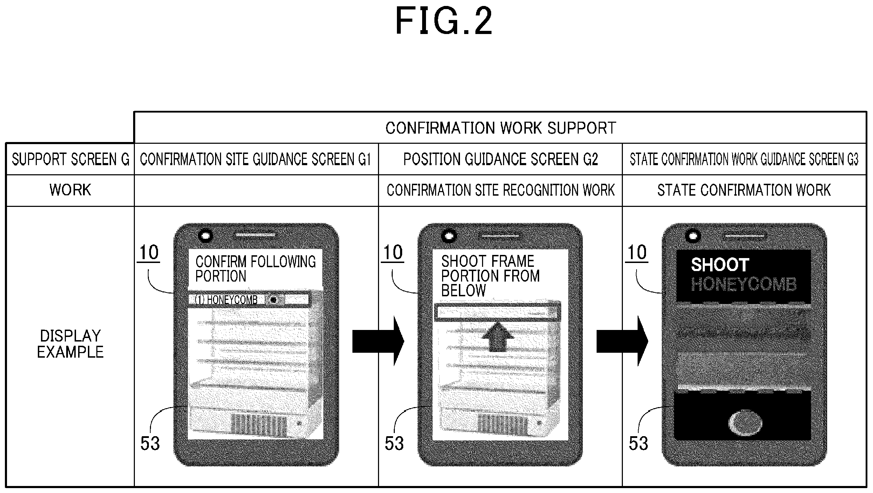

FIG. 2 is a diagram illustrating an example of the support screen G.

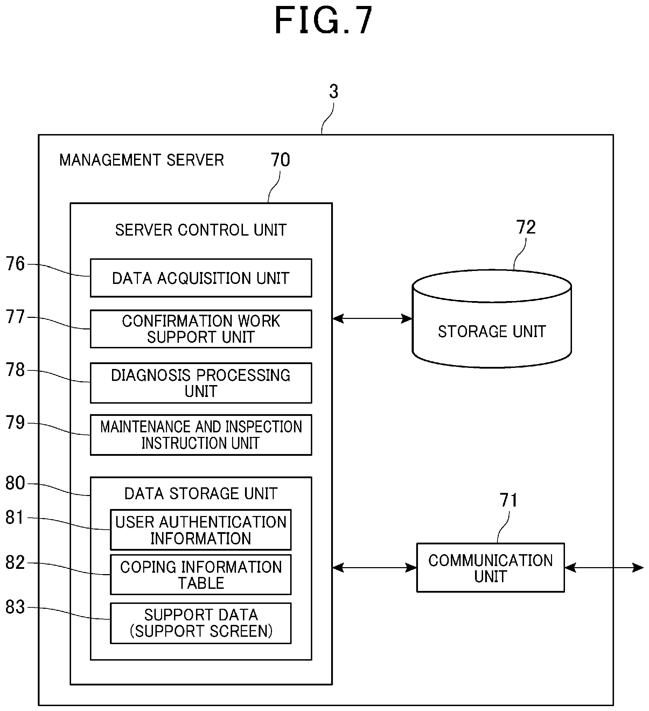

As illustrated in FIG. 2, at least three screens, i.e., a confirmation site guidance screen G1, a position guidance screen G2, and a state confirmation work guidance screen G3 are previously provided as the support screen G, and support data 83 for displaying the support screens G on the store user terminal device 10 is previously stored in a data storage unit 80 (FIG. 7), described below, in the management server 3.

The confirmation site guidance screen G1 is a guidance screen for notifying the store user U of the confirmation site of the cooling installation device 4. In the confirmation site guidance screen G1 in the illustrated example, the store user U is notified that a honeycomb (filter) disposed in a cold air blow-out port of the freezing/refrigeration showcase as one example of the cooling installation device 4 is the confirmation site.

The position guidance screen G2 is a guidance screen displayed after the confirmation site guidance screen G1 for guiding a position of the confirmation site of the cooling installation device 4 to the store user U. In the position guidance screen G2, work for making the store user U recognize the position of the confirmation site by visual recognition or the like (hereinafter referred to as "confirmation site recognition work") is guided to the store user U. On the position guidance screen G2 illustrated in FIG. 2, work for shooting the cold air blow-out port of the refrigeration/freezing showcase (i.e., an arrangement position of the confirmation site) at an angle facing the honeycomb in the cold air blow-out port using the store user terminal device 10 (from another viewpoint, a method of acquiring a picked-up image of the honeycomb as the confirmation site) is guided as the confirmation site recognition work.

When the store user U is made to implement the confirmation site recognition work, the store user U visually recognizes the honeycomb disposed in the cold air blow-out port at the time of shooting, and can recognize that the honeycomb is provided in the cold air blow-out port even if he/her does not know a position of the honeycomb.

The state confirmation work guidance screen G3 is displayed after the position guidance screen G2, and guides the state confirmation work for the confirmation site to the store user U. Further, the state confirmation work guidance screen G3 also includes an illustration guidance display Ga for guiding the state confirmation work for the confirmation site by illustration. On the state confirmation work guidance screen G3 illustrated in FIG. 2, work for shooting the honeycomb as the confirmation site using a camera 54A, described below, in the store user terminal device 10 is guided as the state confirmation work. The honeycomb in the cold air blow-out port to be shot is illustrated as the illustration guidance display Ga. Thus, on the state confirmation work guidance screen G3, the confirmation site (honeycomb) in the cooling installation device 4 to be obtained by image pickup using the camera 54A is guided.

In the confirmation work support, the store user U implements at least two types of work, i.e., the confirmation site recognition work indicated on the position guidance screen G2 and the state confirmation work indicated on the state confirmation work guidance screen G3 after being presented with the confirmation site.

However, when the store user U has well known the cooling installation device 4 as a work object by having an experience in performing maintenance and inspection work many times, for example, and has already grasped a position of the confirmation site, implementation of the confirmation site recognition work on the position guidance screen G2 becomes complicated.

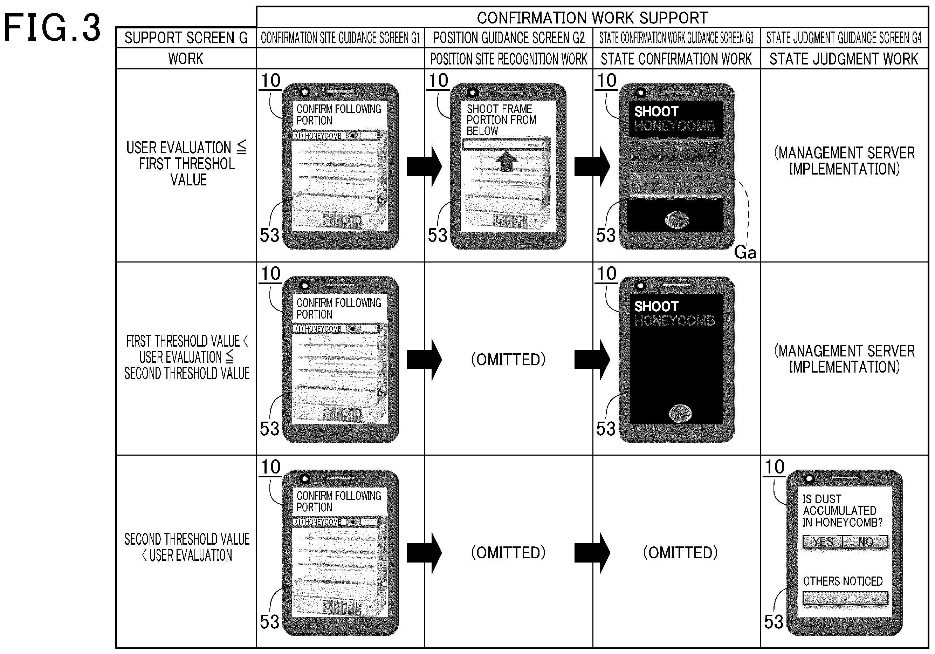

In the cooling installation device management system 1 according to the present embodiment, when a user evaluation such as a proficiency level of the store user U for the cooling installation device 4 as a work object is higher than a first threshold value, display of the position guidance screen G2 is omitted so that the store user U may not implement the work indicated on the support screen G, as illustrated in FIG. 3.

In addition, when the illustration guidance display Ga is also omitted on the state confirmation work guidance screen G3, a guidance by the state confirmation work guidance screen G3 is simplified, to omit useless information so that information matching the store user U is not guided.

If the user evaluation exceeds a second threshold value higher than the first threshold value, both the position guidance screen G2 and the state confirmation work guidance screen G3 are omitted, and a state judgment guidance screen G4 for guiding work for judging the state of the confirmation site to the store user U is displayed on the store user terminal device 10, as illustrated in FIG. 3.

As a result, the store user U the user evaluation of which is high can quickly judge the state of the confirmation site by himself/herself without implementing the state confirmation work following a normal guidance in the confirmation work support and can make the management server 3 specify a cause based on a result of the judgment.

The cooling installation device management system 1 will be more specifically described below.

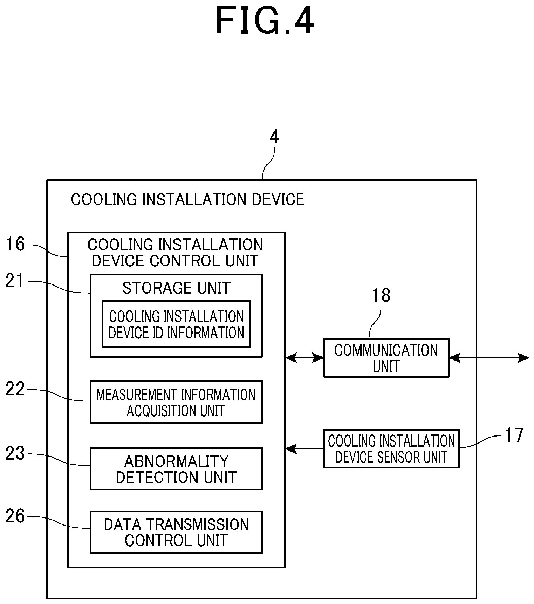

FIG. 4 is a block diagram illustrating a functional configuration of the cooling installation device 4.

The cooling installation device 4 includes a cooling installation device control unit 16, a cooling installation device sensor unit 17, and a communication unit 18.

The cooling installation device control unit 16 includes a computer including a processor such as a CPU or an MPU and a memory device such as a ROM or a RAM, and controls each of the units in the cooling installation device 4.

The cooling installation device sensor unit 17 includes one or more sensors (first sensors), and measures various types of information to be provided for monitoring of an operation state of the cooling installation device 4. This type of information includes at least in-storage-area temperature information. Various types of information to be measured by the cooling installation device sensor unit 17 is hereinafter referred to as "measurement information".

The communication unit 18 transmits and receives information to and from the store device 8 via the network 13, and includes a transmitter/receiver including a receiving circuit and a transmission circuit.

The cooling installation device control unit 16 functions as a storage unit 21, a measurement information acquisition unit 22, an abnormality detection unit 23, and a data transmission control unit 26 when the processor executes a program recorded in the memory device.

The storage unit 21 stores various types of information, and previously stores cooling installation device ID information for uniquely specifying at least the own cooling installation device 4.

The measurement information acquisition unit 22 periodically acquires measurement information from the cooling installation device sensor unit 17 with an appropriate period.

The abnormality detection unit 23 detects an abnormality in an operation of the cooling installation device 4 based on the measurement information. More specifically, a condition to be regarded as abnormal (e.g., a threshold value or a numerical range) is previously set as abnormality determination information in a physical quantity, a physical property, a property, or the like represented by the measurement information. The abnormality detection unit 23 detects an abnormality based on the measurement information and the abnormality determination information every time the measurement information is acquired. The abnormality detection unit 23 may be provided in not the cooling installation device 4 but the other device such as the store device 8 or the management server 3.

The data transmission control unit 26 adds the cooling installation device ID information and other appropriate information to the measurement information acquired by the measurement information acquisition unit 22 every time the measurement information is transmitted to the store device 8, and transmits the measurement information as the operation data D1 to the store device 8 via the communication unit 18. When the abnormality detection unit 23 detects the abnormality, the data transmission control unit 26 adds the cooling installation device ID information and the other appropriate information to an abnormality detection result, and transmits the abnormality detection result as the warning data D2 to the store device 8 via the communication unit 18. The abnormality detection result includes at least an error code representing an abnormality.

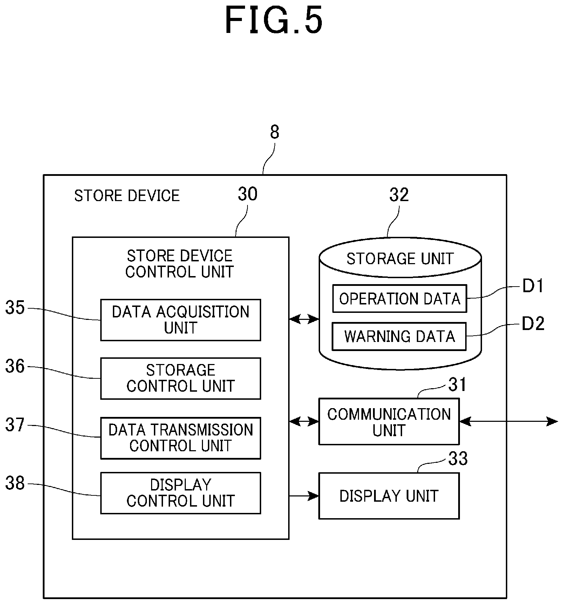

FIG. 5 is a block diagram illustrating a functional confirmation of the store device 8.

The store device 8 includes a store device control unit 30, a communication unit 31, a storage unit 32, and a display unit 33, and is composed of a personal computer, for example.

The store device control unit 30 includes a processor such as a CPU or an MPU and a memory device such as a ROM or a RAM, and controls each of the units in the store device 8.

The communication unit 31 communicates with the cooling installation device 4 and the management server 3 via the network 13, and includes a transmitter/receiver including a receiving circuit and a transmission circuit.

The storage unit 32 includes a data storage device such as an HDD or an SSD, and stores various types of information.

The display unit 33 includes a display, and displays various types of information.

The store device control unit 30 functions as a data acquisition unit 35, a storage control unit 36, a data transmission control unit 37, and a display control unit 38 when the processor executes a program recorded in the memory device.

The data acquisition unit 35 acquires the operation data D1 and the warning data D2 to be transmitted by each of the cooling installation devices 4 via the network 13.

The storage control unit 36 stores the operation data D1 and the warning data D2 acquired by the data acquisition unit 35 in the storage unit 32.

The data transmission control unit 37 transmits the operation data D1 stored in the storage unit 32 to the management server 3 at an appropriate timing. If the warning data D2 is stored in the storage unit 32, the data transmission control unit 37 quickly transmits the warning data D2 to the management server 3 without delay from a storage timing.

The display control unit 38 controls display on the display unit 33. If the warning data D2 is acquired by the data acquisition unit 35, the display control unit 38 displays the abnormality represented by the warning data D2 on the display unit 33, to enable the store user U to recognize the abnormality.

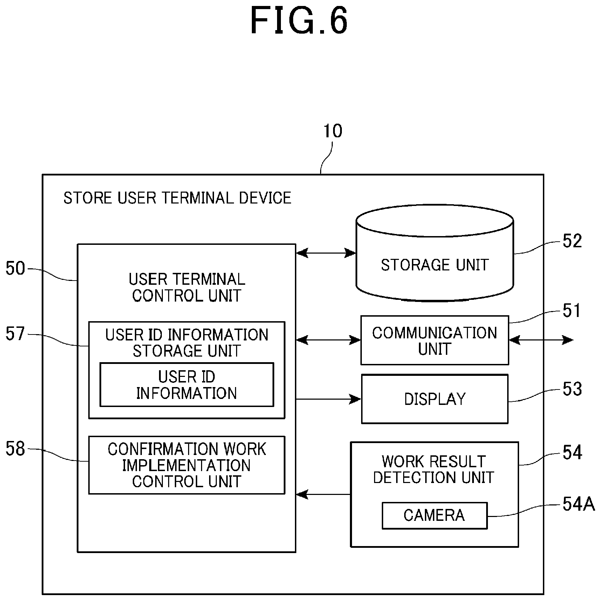

FIG. 6 is a block diagram illustrating a functional configuration of the store user terminal device 10.

The store user terminal device 10 is an information communication terminal device to be operated by the store user U, and a portable mobile terminal such as a smartphone or a tablet PC is used for the store user terminal device 10.

As described above, the store user terminal device 10 is a terminal device for the store user U to receive the confirmation work support by the management server 3 when the store user U performs the confirmation work for the cooling installation device 4 in which the abnormality has occurred.

The store user terminal device 10 includes a user terminal control unit 50, a communication unit 51, a storage unit 52, a display 53, and a work result detection unit 54, as illustrated in FIG. 6.

The user terminal control unit 50 includes a processor such as a CPU or an MPU and a memory device such as a ROM or a RAM, and controls each of the units in the store user terminal device 10.

The communication unit 51 communicates with the management server 3 via the network 13, and includes a transmitter/receiver including a receiving circuit and a transmission circuit.

The storage unit 52 includes a data storage device such as an HDD or an SSD, and stores various types of information.

The display 53 displays various types of information such as the above-described support screen G (FIG. 2 and FIG. 3) acquired from the management server 3.

The work result detection unit 54 detects a result of work indicated by the management server 3 on the support screen G by the store user U. In the present embodiment, a picked-up image is used for information representing a work result, and a camera is provided in the work result detection unit 54 as a sensor (second sensor) for obtaining the picked-up image. The picked-up image by the camera 54A is stored in the storage unit 52.

The user terminal control unit 50 functions as a user ID information storage unit 57 and a confirmation work implementation control unit 58 when the processor executes a program recorded in the memory device.

The program is recorded on a recording medium such as an optical disk or a semiconductor memory, or can be distributed via an electrical communication line such as the Internet.

The user ID information storage unit 57 stores user ID information as identification information on the store user U.

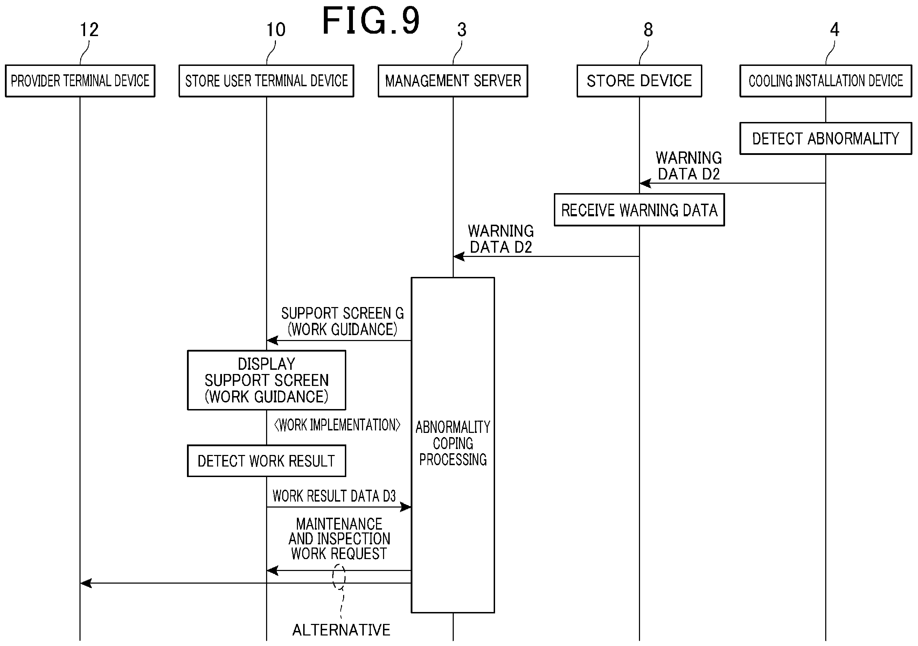

The confirmation work implementation control unit 58 controls receiving and display of the above-described support screen G from the management server 3, acquisition and storage of a work result by image pickup of the camera 54A, and transmission of work result data D3 (see FIG. 9) to the management server 3. The work result data D3 is data for notifying the management server 3 of a work result for work indicated on the support screen G. The confirmation work implementation control unit 58 generates, when the work result detection unit 54 acquires and stores the work result, work result data D3 including the work result (picked-up image) and user ID information on the store user U who has performed work, and transmits the work result data D3 to the management server 3.

FIG. 7 is a block diagram illustrating a functional configuration of the management server 3.

The management server 3 is composed of a server computer including a processor such as a CPU or an MPU, a memory device such as a ROM or a RAM, a storage device such as an HDD or an SSD, an interface circuit for connecting various types of peripheral devices, and a transmission/receiving device for communicating with another communication device via the network 13. The management server 3 functions as a server control unit 70, a communication unit 71, and a storage unit 72, as illustrated in FIG. 7, when the processor executes a program stored in the storage device. The program is recorded on a recording medium such as an optical disk or a semiconductor memory, or can be distributed via an electrical communication line such as the Internet.

The server control unit 70 controls each of the units in the management server 3, and the communication unit 71 transmits and receives information to and from the other communication device such as the store device 8 via the network 13. The storage unit 72 stores various types of information.

The server control unit 70 functions as a data acquisition unit 76, a confirmation work support unit 77, a diagnosis processing unit 78, a maintenance and inspection instruction unit 79, and a data storage unit 80 by executing the above-described program.

The data acquisition unit 76 acquires the operation data D1 and the warning data D2 to be transmitted by the store device 8 via the network 13, and stores the data in the storage unit 72.

The confirmation work support unit 77 performs confirmation work support processing for supporting confirmation work to be performed by the store user U for the cooling installation device 4 in which an abnormality has occurred in the store 2.

The data storage unit 80 stores user authentication information 81, a coping information table 82, and support data 83.

The user authentication information 81 is information for authenticating the store user U as a confirmation work support target. As the information, appropriate information used for user authentication is used.

The coping information table 82 is data for evaluating a user evaluation of the store user U.

In the evaluation, a coping level of the store user U with work at the time of occurrence of an abnormality is evaluated for each cooling installation device 4 and for each device type of the cooling installation device 4 as the user evaluation. The coping level is an index of a capability to enable the store user U to understand information displayed on the support screen G (particularly a confirmation site on the confirmation site presentation screen G1) and appropriately implement state confirmation work to be guided by the state confirmation work guidance screen G3 and state judgment work to be guided by the state judgment guidance screen G4, and becomes high depending on a knowledge level, a skill, a proficiency level, or the like of the store user U for the cooling installation device 4.

In the present embodiment, a proficiency level at which occurrence of an abnormality has been coped with is set as a user evaluation of the store user U. Numbers of times in which the store user U has coped with occurrence of an abnormality are respectively recorded for each cooling installation device 4 and for each device type of the cooling installation device 4 on the coping information table 82, described in detail below, and the proficiency level is evaluated based on the numbers of times.

The support data 83 is various types of data such as the above-described support screen G used for confirmation work support of the store user U.

The diagnosis processing unit 78 performs diagnosis processing for specifying a cause of an abnormality that has occurred in the cooling installation device 4 based on a picked-up image in which a confirmation site acquired by state confirmation work by the store user U appears or a state of a confirmation site judged by the store user U.

The maintenance and inspection instruction unit 79 transmits, depending on the cause specified by the diagnosis processing unit 78, inspection work for coping with the cause to the store user terminal device 10, and instructs the store user U to implement the inspection work. In this case, when specialized knowledge about the cooling installation device 4 in which the abnormality has occurred is required to implement the inspection work, and the inspection work is work difficult to implement by the store user U, the maintenance and inspection instruction unit 79 transmits a maintenance and inspection request to the maintenance and inspection service provider 15 illustrated in above FIG. 1 from the communication unit 71.

The maintenance and inspection service provider 15 is a manufacturer which provides a maintenance and inspection service of the cooling installation device 4. As illustrated in FIG. 1, the maintenance and inspection service provider 15 is provided with a provider terminal device 12 and an engineer terminal device 11 for receiving a maintenance and inspection request from the management server 3 via the network 13.

The provider terminal device 12 is a communication terminal configured to be communicable with the management server 3 via the network 13, and receives the maintenance and inspection request from the management server 3.

Many service engineers E belong to the maintenance and inspection service provider 15. The service engineer E is a worker who has specialized knowledge about the cooling installation device 4 and performs maintenance and inspection work for the cooling installation device 4. The engineer terminal device 11 is an information communication terminal used when the service engineer E performs maintenance and inspection work, and provides various types of tools for supporting the maintenance and inspection work to the service engineer E.

When the maintenance and inspection request is transmitted from the management server 3, and the provider terminal device 12 receives the maintenance and inspection request, the service engineer E goes to the store 2, and performs maintenance and inspection work for the cooling installation device 4 using the engineer terminal device 11, to solve the abnormality that has occurred in the cooling installation device 4.

Examples of maintenance and inspection work requiring specialized knowledge for the cooling installation device 4 include cleaning work involving disassembly of the cooling installation device 4 ("disassembly cleaning") and work such as component replacement and repair.

On the other hand, examples of maintenance and inspection work not requiring such specialized knowledge include work for cleaning portions inside storage areas of the cooling installation device 4 such as cold air blow-out port or a cold air suction port, work for cleaning a filter housed in a device body of the cooling installation device 4, work for cleaning each of the portions inside storage areas of the cooling installation device 4 or a peripheral region including the filter, work for removing a foreign material that blocks airflow via the cold air suction port, and work for removing a foreign material existing in the peripheral region.

Then, an operation of the cooling installation device management system 1 will be described.

FIG. 8 is a sequence diagram of the cooling installation device management system 1 when an abnormality has not occurred in the cooling installation device 4.

In the cooling installation device management system 1, the cooling installation device 4 periodically generates operation data D1 including measurement information at the time point, and transmits, every time it generates the operation data D1, the operation data D1 to the store device 8. The store device 8 stores, when it receives the operation data D1, the operation data D1 in the storage unit 32. The store device 8 collectively transmits the operation data D1 stored in the storage unit 32 to the management server 3 at appropriate timing. The management server 3 stores, when it receives the operation data D1 from the store device 8, the operation data D1 in the storage unit 72.

FIG. 9 is a sequence diagram of the cooling installation device management system 1 when an abnormality has occurred in the cooling installation device 4.

When the abnormality detection unit 23 detects the abnormality in the cooling installation device 4, the cooling installation device 4 transmits warning data D2 representing occurrence of the abnormality to the store device 8. The store device 8 quickly transmits, when it receives the warning data D2, the warning data D2 to the management server 3. The management server 3 performs, when it receives the warning data D2, abnormality coping processing. In the abnormality coping processing, the management server 3 instruct the store user U to perform confirmation work support, specify a cause of the abnormality, and perform maintenance and inspection work for coping with the cause.

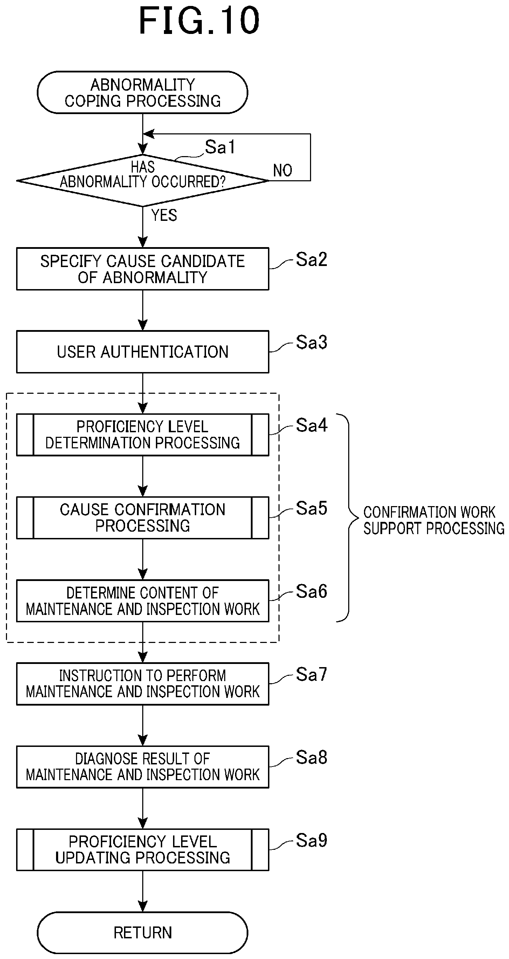

FIG. 10 is a flowchart of the abnormality coping processing.

As illustrated in FIG. 10, if the management server 3 receives warning data D2, for example, and detects occurrence of an abnormality in the cooling installation device 4 (step Sa1: YES), the management server 3 specifies a candidate to be estimated as a cause of the abnormality (hereinafter referred to as "a cause candidate") based on operation data D1 or the like of the cooling installation device 4 in which the abnormality has occurred (step Sa2). For a method of specifying the cause candidate, a known or well-known appropriate technique can be used. In step Sa1, the management server 3 may detect the occurrence of the abnormality by a report in a telephone, a chat, or the like from the store user U.

A portion a state of which is to be confirmed is associated with the cause candidate to confirm that the cause candidate is the cause of the abnormality, and the portion is set as a confirmation site. If an abnormality of an in-storage-area temperature is detected in the cooling installation device 4, for example, examples of a cause candidate include frost formation on an evaporator in the cooling installation device 4. In this case, the evaporator is associated as a confirmation site.

When the cause candidate is specified, the management server 3 performs subsequent confirmation work support processing to support state confirmation work of the confirmation site by the store user U.

That is, in the confirmation work support processing, the management server 3 communicates with the store user terminal device 10, acquires the above-described user ID information on the store user U who is to implement confirmation work, and performs user authentication based on the user authentication information 81 (step Sa3). Then, the management server 3 performs proficiency level determination processing, described below, to determine a proficiency level of the store user U corresponding to the user ID information (step Sa4), and then performs cause confirmation processing (step Sa5). In the cause confirmation processing, the store user U performs state confirmation work or state judgment work of the confirmation site under support corresponding to the proficiency level of the store user U by the management server 3, and the cause candidate is confirmed as the cause of the abnormality based on a picked-up image of the confirmation site acquired by the state confirmation work or a result of state judgment by the store user U.

The management server 3 determines a content of maintenance and inspection work coping with the confirmed cause (step Sa6), and transmits the maintenance and inspection work to the store user terminal device 10, to instruct the store user U to implement the maintenance and inspection work (step Sa7). When the store user U implements the maintenance and inspection work, a work result of the maintenance and inspection work is transmitted to the management server 3 from the store user terminal device 10. The management server 3 performs diagnosis as to whether the maintenance and inspection work has been normally performed based on the work result (step Sa8). If the maintenance and inspection work has not been normally performed, an instruction to implement maintenance and inspection work again, together with information for supporting the maintenance and inspection work by the store user U, is transmitted to the store user terminal device 10. The store user U implements the maintenance and inspection work again according to the instruction. The instruction to implement the maintenance and inspection work is repeated until the maintenance and inspection work is normally performed.

When the maintenance and inspection work is normally performed so that the abnormality is solved, the management server 3 performs proficiency level updating processing, described below, to update the proficiency level of the store user U (step Sa9). As a result, every time an abnormality in the cooling installation device 4 is coped with, a proficiency level of the store user U who has coped with the abnormality is updated.

Then, the proficiency level determination processing, the cause confirmation processing, and the proficiency level updating processing in the above-described abnormality coping processing will be described in detail.

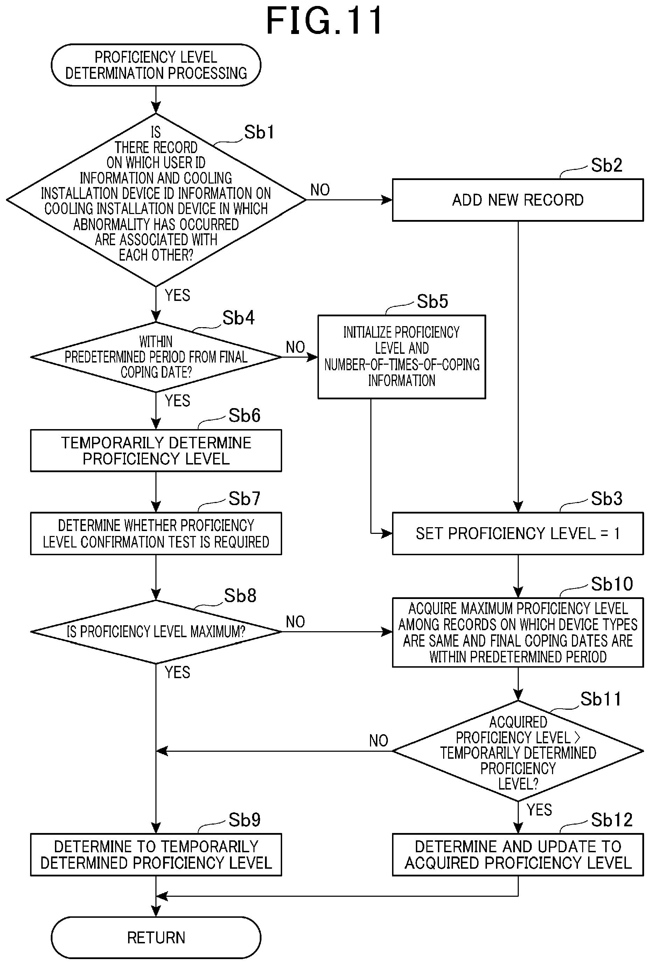

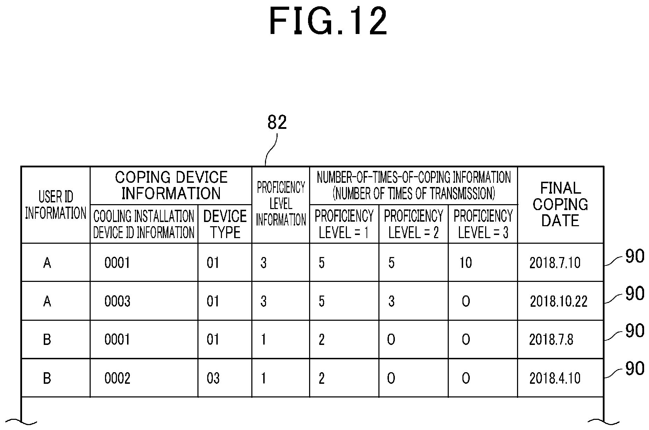

FIG. 11 is a flowchart of the proficiency level determination processing, and FIG. 12 is a diagram illustrating an example of a coping information table 82 to be referred to in the proficiency level determination processing.

As illustrated in FIG. 12, user ID information, coping device information, proficiency level information, number-of-times-of-coping information, and a final coping date are recorded in association with one another on one record 90 in the coping information table 82.

In the coping device information, information about the cooling installation device 4 an abnormality of which has been coped with by the store user U is recorded, and cooling installation device ID information on the cooling installation device 4 that has been subjected to state confirmation work by the store user U and a device type of the cooling installation device 4 are recorded. In the device type, identification information for specifying "same type of devices" is recorded. The "same type of devices" refer to cooling installation devices 4 that can utilize an experiences of confirmation work for the cooling installation device 4 in common. Examples of the same type of devices include a group of cooling installation devices 4 belonging to the same series and cooling installation devices 4 respectively having substantially the same structures and component arrangements. For example, when the two cooling installation devices 4 are common in a position of a confirmation site and a content of state confirmation work of the confirmation site, the cooling installation devices 4 can be said to be the same type of devices.

The proficiency level information is information about a proficiency level representing a height of a user evaluation of the store user U. In the present embodiment, the proficiency level is partitioned into three levels from "1" to "3", and means that the larger a numerical value is, the higher the proficiency level is.

The number-of-times-of-coping information is information obtained by adding up a number of times in which confirmation work of a cause of an abnormality has been coped with for each proficiency level of the store user U at the time of the coping. In the present embodiment, a number of times of transmission in which work result data D3 representing a work result has been transmitted by the store user U is counted as the number of times. The number-of-times-of-coping information is updated and recorded in the proficiency level updating processing, described below, every time the store user U copes with the confirmation work, and a proficiency level as a user evaluation value is also updated by a result of the updating and recording.

The final coping date is information about a date on which the store user U has finally performed the confirmation work.

In the proficiency level determination processing, as illustrated in FIG. 11, the management server 3 determines whether there is a record on which cooling installation device ID information on the cooling installation device 4 in which an abnormality has occurred is associated with user ID information on the store user U in the coping information table 82 (step Sb1). If there is no record (step Sb1: NO), the management server 3 newly adds the record on which the user ID information and the cooling installation device ID information are associated with each other to the coping information table 82 (step Sb2). In this case, on the record in the coping information table 82, the store user U has performed work for the first time for the cooling installation device 4 in which the abnormality has occurred. Accordingly, the management server 3 sets a proficiency level of the store user U to "1" (step Sb3).

On the other hand, in the determination in step Sb1, if the record exists (step Sb1: YES), the management server 3 determines whether a final coping date recorded on the record is within a predetermined period (step Sb4). If the predetermined period has elapsed from the final coping date until now (step Sb4: NO), the management server 3 initializes (clears) the proficiency level and number-of-times-of-coping information (step Sb5), and sets the proficiency level to "1" (step Sb3). As a result, if a time period has elapsed from the final coping date, and a probability that a memory of confirmation work at that time by the store user U has faded is high, the proficiency level can be initialized to match the probability.

If the predetermined period has not elapsed from the final coping date (step Sb4: YES), the management server 3 temporarily determines a proficiency level represented by proficiency level information as the proficiency level of the store user U (step Sb6). Then, after the management server 3 determines whether a proficiency level confirmation test, described below, is required (step Sb7), and if the temporarily determined proficiency level is a maximum (step Sb8: YES), the management server 3 determines the proficiency level of the store user U to the temporarily determined proficiency level (step Sb9).

On the other hand, if the temporarily determined proficiency level is not a maximum (step Sb8: NO), the management server 3 acquires a maximum proficiency level (hereinafter referred to as a "same type maximum proficiency level") from among records in which respective device types are the same and respective final coping dates are within the predetermined period from the current date (step Sb10), and compares the same type proficiency level with the temporarily determined proficiency level (step Sb11). If the same type proficiency level is higher (step Sb11: YES), the management server 3 determines the proficiency level of the store user U as the same type proficiency level (step Sb12). If the same type proficiency level is lower (step Sb11: NO), the management server 3 determines the proficiency level of the store user U as the temporarily determined proficiency level (step S9). As a result, as the proficiency level of the store user U, a proficiency level on which an experience and a performance of confirmation work performed for the cooling installation devices 4 of the same device type have been reflected is determined.

By the above-described proficiency level determination processing, the proficiency level of the store user U is appropriately determined based on the cooling installation devices 4 in which abnormalities have occurred, a proficiency level associated with each of respective device types of the cooling installation devices 4, and an elapsed period from a final coping date.

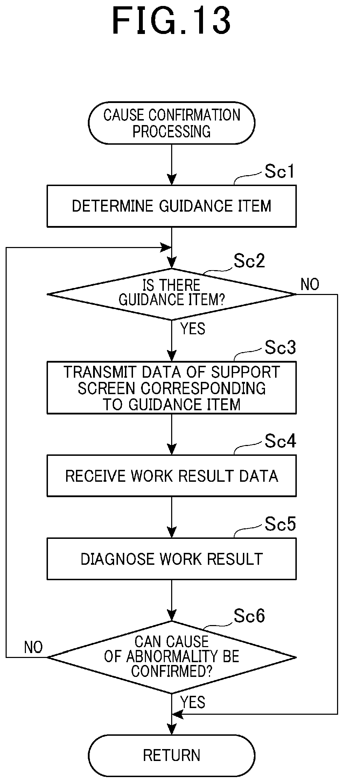

FIG. 13 is a flowchart of cause confirmation processing.

In the cause confirmation processing, the management server 3 determines a guidance item to be guided to the store user U depending on a proficiency level of the store user U from presentation of a confirmation site to the store user U to state confirmation work of the confirmation site by the store user U (step Sc1).

As described in above FIG. 2 and FIG. 3, in the present embodiment, guidances by the support screens G, i.e., the confirmation site guidance screen G1, the position guidance screen G2, the state confirmation work guidance screen G3, and the state judgment guidance screen G4 are respectively previously set as guidance items.

In step Sb1, if the proficiency level of the store user U is "1" (corresponding to a case where the user evaluation illustrated in FIG. 3 is not more than the first threshold value), the respective guidances by the confirmation site guidance screen G1, the position guidance screen G2, and the state confirmation work guidance screen G3 are determined.

If the proficiency level is "2" (corresponding to a case where the user evaluation illustrated in FIG. 3 is more than the first threshold value and is not more than the second threshold value), the guidance by the position guidance screen G2 is omitted, and the respective guidances by the confirmation site guidance screen G1 and the state confirmation work guidance screen G3 are determined.

Further, if the proficiency level is "3" (corresponding to a case where the user evaluation illustrated in FIG. 3 is more than the second threshold value), the respective guidances by the position guidance screen G2 and the state confirmation work guidance screen G3 are omitted, and the guidance by the confirmation site guidance screen G1 and the guidance by the state judgment guidance screen G4 are determined.

Then, while a guidance item not yet presented to the store user U remains (step Sc2: YES), the management server 3 transmits data of the support screen G corresponding to the guidance item to the store user terminal device 10 (step Sc3).

The store user terminal device 10 displays, when it receives the data of the support screen G from the management server 3, the support screen G on the display 53, and guides work indicated on the support screen G to the store user U, as described in above FIG. 9. As a result, the store user U can grasp work to be performed by himself/herself.

When the store user U finishes implementing the work, the camera 54A in the store user terminal device 10 picks up an image of a work result. The store user terminal device 10 generates work result data D3 including a picked-up image as the work result and user ID information, and transmits the work result data D3 to the management server 3.

Referring to FIG. 13 again, when the management server 3 receives the work result data D3 from the store user terminal device 10 (step Sc4), the management server 3 diagnoses a result of the work implemented by the store user U based on the work result data D3 (step Sc5). In the respective examples illustrated in above FIG. 2 and FIG. 3, a work result of the confirmation site recognition work by the position guidance screen G2 or the state confirmation work by the state confirmation work guidance screen G3 are diagnosed in step Sc5. In the diagnose, the management server 3 determines whether the work has been appropriately performed, and issues, if the work result is inappropriate, an instruction to implement the work again until the work is appropriately performed. In this case, the management server 3 may support the work such that the store user U can appropriately implement the work by transmitting the support screen G for more specifically guiding a work content to the store user terminal device 10.

In step Sc3, when the support screen G including no instruction to implement work (e.g., the confirmation site presentation screen G1) is presented, processes in step Sc4 and Sc5 are skipped.

Then, if the management server 3 can confirm a cause by the work result by the store user U (step Sc6: YES), processing ends as it is. If the management server 3 cannot confirm the cause (step Sc6: NO), a processing procedure is returned to step Sc2 to make the store user U continue the confirmation work by presenting a subsequent guidance item. In the respective examples illustrated in above FIG. 2 and FIG. 3, it is judged whether the cause has been confirmed based on the picked-up image of the confirmation site (honeycomb) acquired as a work result of the state confirmation work of the confirmation site or a result of the state judgment (how dust of the honeycomb is accumulated) performed by the store user U for the state judgment work.

In the cause confirmation processing, if the proficiency level of the store user U who implement the confirmation work is high, some of the guidances by the support screens G (the guidance of the position of the confirmation site by the position guidance screen G2 in the example illustrated in FIG. 2) is omitted. Accordingly, the store user U may not implement work following the guidance.

As a result, even if the work is advanced upon receiving the confirmation work support by the management server 3, the store user U can implement only work matching his/her own proficiency level and need not implement work useless for himself/herself.

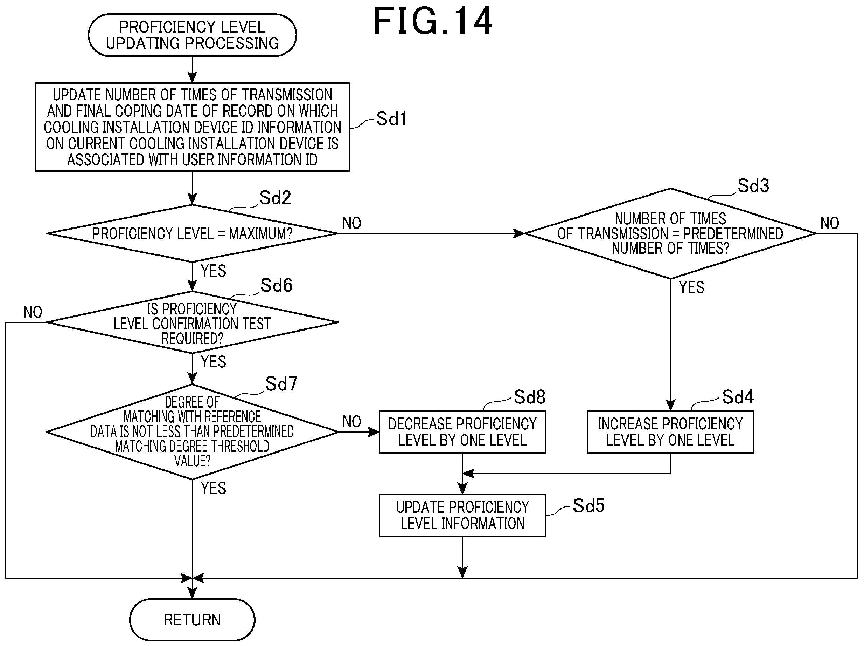

FIG. 14 is a flowchart of the proficiency level updating processing.

In the proficiency level updating processing, the management server 3 extracts a record for the store user U from the coping information table 82, and updates number-of-times-of-coping information and a final coping date associated with the cooling installation device 4 for which the store user U has implemented work (step Sd1).

More specifically, a number of times of transmission associated with a proficiency level at the current time point of the store user U is added. As described above, in the present embodiment, in the abnormality coping processing, a number of times of transmission in which the work result data D3 is transmitted from the store user terminal device 10 is added to the number-of-times-of-coping information.

Then, if the proficiency level of the store user U is not a maximum ("3" in the present embodiment) (step S2d: NO), the management server 3 judges whether a number of times of transmission after updating by the addition exceeds a predetermined number of times (e.g., "five times") to reflect number-of-times-of-coping information after the updating on the proficiency level (step Sd3). A value that differs for each proficiency level may be set as the predetermined number of times.

If the number of times of transmission exceeds the predetermined number of times (step Sd3: YES), the management server 3 increases the proficiency level of the store user U by one level (step Sd4), and updates the record for the store user U at the proficiency level (step Sd5).

As a result, the proficiency level is increased depending on a number of times in which the store user U has implemented work.

Even if the proficiency level is increased in step Sd4, a number of times of transmission associated with the original proficiency level is maintained without being cleared.

In the proficiency level updating processing, it is judged whether maintenance of the proficiency level at the current time point is valid, and the proficiency level is decreased if the maintenance is not valid.

For details of the processing, if the proficiency level of the store user U is a maximum (step Sd2: YES), the management server 3 judges whether a proficiency level confirmation test is required (step Sd6). The proficiency level confirmation test is a test for confirming whether the proficiency level at the current time point of the store user U is valid. In the present embodiment, as the proficiency level confirmation test, coping of the store user U with the work presented by the support screen G is evaluated based on the work result represented by the work result data D3. More specifically, the management server 3 compares reference data previously provided for the work with the work result by the store user U, to evaluate the coping of the store user U. The reference data is data representing a valid work result, and appropriate data is set depending on a content and a type of the work. If a matching degree between the reference data and the work result by the store user U is below a predetermined matching degree threshold value (step Sd7: NO), the management server 3 decreases the proficiency level by one level (step Sd8), and updates the record for the store user U at the proficiency level (step Sd5).

If the proficiency level is decreased in step Sd8, the number of times of transmission associated with the original proficiency level is maintained without being cleared. As described above, even if the proficiency level is increased in step Sd4, the number of times of transmission associated with the original proficiency level is maintained without being cleared. Accordingly, when the store user U finishes the work for the abnormality next time, the proficiency level is updated to a proficiency level increased by one level by processing in steps Sd3 and Sd4, and can immediately return to a higher proficiency level. If the proficiency level has returned to the higher proficiency level, the proficiency level confirmation test is conducted based on a work result of work for an abnormality, which has been first performed after the return. Therefore, if the coping level of the store user U does not match the higher proficiency level, the proficiency level is quickly returned to a lower proficiency level matching a coping level at the time point.

In the proficiency level confirmation test, a work time period required for the store user U to implement the work is measured, and the proficiency level may be decreased if the work time period is a predetermined time period. The work time period is measured based on a time period elapsed since the work was presented by the support screen G until the work result data D3 is transmitted, for example.

The proficiency level is increased depending on the number of times in which the store user U has implemented the work by the above-described proficiency level updating processing, and is maintained at a proficiency level matching the store user U at the time point by the proficiency level confirmation test. Therefore, in the work confirmation support by the management server 3, a guidance matching the store user U at the time point is appropriately performed.

According to the present embodiment, the following effect is produced.

In the present embodiment, the management server 3 omits, if the proficiency level as the user evaluation of the store user U evaluated based on the work result data D3 and the user ID information is more than "1", some of the plurality of types of work (more accurately, the confirmation site recognition work: FIG. 2) guided by displaying the support screen G on the display 53 in the store user terminal device 10.

As a result, if the proficiency level is more than "1", the store user U need not implement the work not required at his/her own proficiency level among the types of work guided by the confirmation work support. Accordingly, a work burden related to the maintenance and inspection at the time of the occurrence of the abnormality can be reduced, and the confirmation work of the confirmation site can be quickly finished.

In the present embodiment, if the proficiency level as the user evaluation is "1", the management server 3 transmits to the store user terminal device 10 the position guidance screen G2 (first guidance) for guiding the confirmation site recognition work (first work) for making the store user U recognize the position of the confirmation site in the cooling installation device 4 and the state confirmation work guidance screen G3 (second guidance) for guiding the state confirmation work (second work) for the confirmation site. On the other hand, if the proficiency level is "2", the management server 3 omits the position guidance screen G2 (first guidance), and transmits the state confirmation work guidance screen G3 (second guidance) to the store user terminal device 10.

As a result, the store user U having the proficiency level at which the work can be implemented only by the state confirmation work guidance screen G3 (second guidance) can be prevented from being made to perform useless work even if the position guidance screen G2 (first guidance) is not guided.

In the present embodiment, if the management server 3 omits both the position guidance screen G2 (first guidance) and the state confirmation work guidance screen G3 (second guidance) if the proficiency level is more than "2", and transmits to the store user terminal device 10 the state judgment guidance screen G4 (third guidance) for making the store user U judge the state of the confirmation site in the cooling installation device 4.

As a result, when the abnormality occurs in the cooling installation device 4, the store user U the proficiency level of which is more than "2" can quickly judge the state of the confirmation site by himself/herself without implementing work following a normal guidance of the confirmation work support, and can make the management server 3 specify a cause based on a judgment result.

In the present embodiment, if the proficiency level is "2", the management server 3 transmits to the store user terminal device 10 the state confirmation work guidance screen G3 (second guidance) on which the guidance is simplified because the illustration guidance display Ga is omitted.

As a result, useless information is omitted from the state confirmation work guidance screen G3, and information matching the store user U can be guided.

In the present embodiment, the management server 3 can evaluate the proficiency level based on the number of times of transmission of the work result data D3. Accordingly, an experience and a performance of the confirmation work performed for the cooling installation device 4 can be quantified by the number of times of transmission of the work result data D3, and can be reflected on the proficiency level.

In the present embodiment, the management server 3 decreases, if the proficiency level becomes "3" (if the proficiency level is more than the second threshold value), the proficiency level by one level when a matching degree between the work result represented by the work result data D3 and the reference data is less than the predetermined matching degree threshold value (FIG. 14: steps Sd7 and Sd8).

As a result, even if the store user U obtains the user evaluation as the proficiency level "3", the user evaluation can be decreased to a proficiency level matching a coping level with work.

In the present embodiment, the management server 3 adds the proficiency level every time the number of times of transmission of the work result data D3 reaches the predetermined number of times, and decreases the proficiency level when the time period required for the work is not less than the predetermined time period or the matching degree between the work result represented by the work result data D3 and the reference data is less than the predetermined matching degree threshold value.

As a result, a proficiency level on which an experience and a performance of the work performed for the cooling installation device 4 by the store user U and a coping level backed up by a result of the work have been reflected can be set.

In the present embodiment, the management server 3 adds up the number of times of transmission of the work result data D3 for the proficiency level of the store user U at the time point where the work is performed, and therefore can accurately evaluate the experience and the performance of the work for the proficiency level at the time of the work.

In the present embodiment, the management server 3 decreases the proficiency level of the store user U by initialization when a predetermined period has elapsed since the final coping date on which the work result data D3 is finally acquired. Accordingly, if a probability that a memory of the work has faded is high, the management server 3 can decrease the proficiency level to match the probability.

In the present embodiment, the management server 3 evaluates the proficiency level for each cooling installation device ID information on the cooling installation device 4, and therefore can appropriately support work depending on the proficiency level of the store user U for each cooling installation device.

In the present embodiment, the management server 3 also evaluates the proficiency level for each device type of the cooling installation device 4, omits the position guidance screen G2 (first guidance) even if the proficiency level corresponding to the cooling installation device ID information on the cooling installation device 4 is "1" and if the proficiency level for the cooling installation devices 4 that are the same in device type and differ in cooling installation device ID information is "2", and transmits the state confirmation work guidance screen G3 (second guidance) to the store user terminal device 10.

As a result, the store user U can receive support matching an experience and a performance of his/her work when receiving confirmation work support for not only the cooling installation devices 4 of the same cooling installation device ID information but also a group of cooling installation devices 4 of the same type.

The above-described embodiment is merely an illustration of one aspect of the present invention, and variations and applications are optionally possible without departing from the gist of the invention.

### (Modification 1)

Although in the above-described embodiment, the proficiency level is evaluated based on the number of times of transmission of the work result data D3, the present invention is not limited to this. A proficiency level may be evaluated based on an effective number of times representing a number of times in which a store user U has performed effective work instead of the number of times of transmission.

As a result, a coping level of the store user U with the work can be reflected on determination of the proficiency level.

In this case, a management server 3 may add the effective number of times depending on a time period required for the work by the store user U or a degree of matching between a work result of work result data D3 and reference data.

As a result, the coping level of store user U with the work is accurately quantified, and can be reflected on determination of the proficiency level.

### (Modification 2)

Although in the above-described embodiment, the management server 3 is configured to transmit the data related to the display of the support screen G to the store user terminal device 10 in the confirmation work support, the present invention is not limited to this. A management server 3 may be configured to previously store data required for display of a support screen G in a memory, a data storage, or the like in a store user terminal device 10.

In this case, in confirmation work support, the management server 3 transmits information indicating the support screen G to the store user terminal device 10 instead of data required for the display of the support screen G, and the store user terminal device 10 displays the support screen G on a display 53 based on the information.

### (Modification 3)

In the above-described embodiment, a case is illustrated where when the abnormality has occurred in the cooling installation device 4, the confirmation work for the store user U to confirm the site of the cooling installation device 4 associated with the cause of the abnormality is supported using the management server 3 to determine the cause of the abnormality.

However, the present invention is not limited to this. For example, work related to appropriate maintenance and inspection to be performed by a store user U can be supported using a management server 3.

### (Modification 4)

Although in the above-described embodiment, a case is illustrated where the work by the store user U as a user belonging to the store 2 is supported using the management server 3, the present invention is not limited to this. For example, work by any user such as a service engineer E can be supported. When work support for the service engineer E is performed, for example, a support screen G is displayed on a display included in an engineer terminal device 11 depending on a user evaluation such as a proficiency level of the engineer E.

### (Other Modifications)

The functional blocks illustrated in FIG. 1 to FIG. 7 are schematic views each illustrating components by classifying the components depending on a main processing content to make it easy to understand the invention of the present application, and the components can also be classified into more components depending on the processing content. The components can also be classified such that one of the components performs more processes.

Each of the control units in FIG. 1 to FIG. 7 may be performed by one piece of hardware, or may be performed by a plurality of pieces of hardware. Processing of each of the components may be performed by one program, or may be performed by a plurality of programs.

A management server 3 is composed of a computer system including a plurality of sever computers, and the server computers may implement various types of functions illustrated in FIG. 7 in common.

As described above, a work support method and a program according to the present invention can be applied to various types of applications with work by a user for a cooling installation device because appropriate support matching a worker can be performed.

### Reference Signs List

- 1: Cooling installation device management system (work support system)
- 3: Management server (computer)
- 4: Cooling installation device
- 10: Store user terminal device
- 11: Engineer terminal device
- 13: Network
- 17: Cooling installation device sensor unit (first sensor)
- 22: Measurement information acquisition unit
- 23: Abnormality detection unit
- 53: Display
- 54: Work result detection unit
- 54A: Camera (second sensor)
- 77: Confirmation work support unit
- 82: Coping information table
- 83: Support data
- D3: Work result data
- E: Service engineer (user)
- U: Store user (user)
- G: Support screen
- G1: Confirmation site guidance screen
- G2: Position guidance screen
- G3: State confirmation work guidance screen
- G4: State judgment guidance screen

## Claims

1. A work support method used for a work support system (1) that supports, using a computer (3) connected via a network (13) to at least one cooling installation device (4) and a terminal device, the cooling installation device including a first sensor (17) that acquires measurement information including at least in-storage-area temperature information, the terminal device including a second sensor (54A) that acquires information different from the in-storage-area temperature information from the cooling installation device and a display (53), the terminal device being operated by a user, work by the user related to maintenance and inspection for the cooling installation device, the work support method **characterized by** comprising:
receiving from the terminal device user ID information on the user and work result data (D3) representing a work result by the user;
transmitting to the terminal device, as display information to be displayed on the display, a first guidance for guiding a method of acquiring information about a site of the cooling installation device by the second sensor and a second guidance for guiding a site of the cooling installation device to acquire information by the second sensor, when a user evaluation of the user evaluated based on the work result data and the user ID information is not more than a predetermined first threshold value; and
omitting the first guidance and transmitting the second guidance to the terminal device as display information to be displayed on the display when the user evaluation is more than the first threshold value.

2. The work support method according to claim 1, wherein
when the user evaluation is more than a second threshold value larger than the first threshold value,
the first guidance and the second guidance are omitted as the display information to display on the display, and
a third guidance for making the user judge a state of a work object in the cooling installation device is transmitted to the terminal device.

3. The work support method according to claim 2, wherein
when the user evaluation is more than the first threshold value and is not more than the second threshold value,
the second guidance a content of which is simplified is transmitted to the terminal device as the display information to be displayed on the display.

4. The work support method according to claim 2 or 3, wherein the user evaluation is evaluated based on a number of times of transmission of the work result data.

5. The work support method according to claim 4, wherein
when the user evaluation is the first threshold value or the second threshold value,
the user evaluation is decreased when a time period required for the work is not less than a predetermined time period or a degree of matching between the work result data and reference data is less than a predetermined matching degree threshold value.

6. The work support method according to any one of claims 1 to 3, wherein the user evaluation is evaluated based on an effective number of times as a number of times in which effective work is performed by the user.

7. The work support method according to claim 6, wherein the effective number of times is added depending on a time period required for the work or a degree of matching between a work result represented by the work result data and reference data.

8. The work support method according to any one of claims 1 to 3, wherein the user evaluation is a proficiency level based on a number of times of transmission of the work result data or an effective number of times as a number of times in which effective work is performed by the user.

9. The work support method according to claim 8, wherein the proficiency level is added every time the number of times of transmission or the effective number of times reaches a predetermined number of times, and is decreased when a time period required for the work is not less than a predetermined time period or a degree of matching between the work result data and reference data is less than a predetermined matching degree threshold value.

10. The work support method according to claim 9, wherein the number of times of transmission or the effective number of times is added up for the proficiency level of the user when the user performs the work.

11. The work support method according to any one of claims 8 to 10, wherein the proficiency level of the user is decreased when a predetermined period has elapsed since the work result data is acquired.

12. The work support method according to claim 1, wherein the user evaluation is performed for each of cooling installation device ID information on the cooling installation devices.

13. The work support method according to claim 1, wherein the user evaluation is performed for each of device types of the cooling installation devices.

14. The work support method according to claim 1, wherein
the user evaluation is performed for each of cooling installation device ID information on the cooling installation devices and for each of device types of the cooling installation devices, and
even when the respective user evaluations corresponding to the cooling installation device ID information on the cooling installation devices are not more than the first threshold value,
the first guidance is omitted and the second guidance is transmitted to the terminal device when the respective user evaluations of the cooling installation devices that are the same in the device type and differ in the cooling installation device ID information are more than the first threshold value.

15. A work support method used for a work support system (1) that supports, using a computer (3) connected via a network (13) to a cooling installation device (4) and a terminal device, the cooling installation device including a first sensor (17) that acquires measurement information including at least in-storage-area temperature information, the terminal device including a second sensor (54A) that acquires information different from the in-storage-area temperature information from the cooling installation device and a display (53), the terminal device being operated by a user, work by the user related to maintenance and inspection for the cooling installation device, **characterized in that**
the terminal device
transmits user ID information on the user and work result data representing a work result (D3) by the user, and
transmits to the terminal device, as display information to be displayed on the display, a first guidance for guiding a method of acquiring information about a site of the cooling installation device by the second sensor and a second guidance for guiding a site of the cooling installation device to acquire information by the second sensor, when a user evaluation of the user evaluated based on the work result data and the user ID information is not more than a predetermined first threshold value, and
omits the first guidance and transmits the second guidance to the terminal device as display information to be displayed on the display when the user evaluation is more than the predetermined first threshold value.

16. A program characterized for causing a computer (3) connected via a network (13) to a cooling installation device (4) and a terminal device, the cooling installation device including a first sensor (17) that acquires measurement information including at least in-storage-area temperature information, the terminal device including a second sensor (54A) that acquires information different from the in-storage-area temperature information from the cooling installation device and a display (53), the terminal device being operated by a user, the computer being in a work support system (1) for supporting work by the user related to maintenance and inspection for the cooling installation device using the computer, to perform processing for:
receiving from the terminal device user ID information on the user and work result data (D3) representing a work result by the user; and
transmitting to the terminal device, as display information to be displayed on the display, a first guidance for guiding a method of acquiring information about a site of the cooling installation device by the second sensor and a second guidance for guiding a site of the cooling installation device to acquire information by the second sensor, when a user evaluation of the user evaluated based on the work result data and the user ID information is not more than a predetermined first threshold value; and
omitting the first guidance and transmitting the second guidance to the terminal device as display information to be displayed on the display when the user evaluation is more than the predetermined first threshold value.

17. A program characterized for causing, using a computer (3) connected via a network (13) to a cooling installation device (4) and a terminal device, the cooling installation device including a first sensor (17) that acquires measurement information including at least in-storage-area temperature information, the terminal device including a second sensor (54A) that acquires information different from the in-storage-area temperature information from the cooling installation device and a display (53), the terminal device being operated by a user, the terminal device being in a work support system (1) for supporting work by the user related to maintenance and inspection for the cooling installation device, to perform processing for:
transmitting user ID information on the user and work result data representing a work result (D3) by the user,
transmitting to the terminal device, as display information to be displayed on the display, a first guidance for guiding a method of acquiring information about a site of the cooling installation device by the second sensor and a second guidance for guiding a site of the cooling installation device to acquire information by the second sensor, when a user evaluation of the user evaluated based on the work result data and the user ID information is not more than a predetermined first threshold value, and
omitting the first guidance and transmitting the second guidance to the terminal device as display information to be displayed on the display when the user evaluation is more than the predetermined first threshold value.
